# EUROPÄISCHE PATENTSCHRIFT

(11) **EP 1 745 962 B1**
(45) Veröffentlichungstag und Bekanntmachung des Hinweises auf die Patenterteilung: **04.01.2012**
(21) Anmeldenummer: 06013715.5
(22) Anmeldetag: 03.07.2006
(51) Int. Cl.: B60J 7/185, B60J 7/12

(54) **Fahrzeugschiebedach**
Vehicle sunroof
Toit ouvrant pour véhicule

(30) Priorität: 20.07.2005 DE 102005033843
(43) Veröffentlichungstag der Anmeldung: 24.01.2007
(73) Patentinhaber: Wilhelm Karmann GmbH, 49084 Osnabrück (DE)
(72) Erfinder: Hahn, Stefan, 49143 Bissendorf (DE)
(74) Vertreter: Kronthaler, Schmidt & Coll.

(56) Entgegenhaltungen:
- EP-A- 0 811 518
- WO-A-03/039898
- DE-A1- 4 304 028
- DE-A1- 10 211 624
- DE-A1- 10 340 616
- DE-A1- 19 737 031

## Beschreibung

Die Erfindung betrifft ein Fahrzeug mit einem Fahrzeugaufbau, gemäß den Merkmalen des Oberbegriffes von Anspruch 1.

Aus der DE 196 08 495 C2 ist eine Verriegelungsvorrichtung für ein Verdeck eines Kraftfahrzeugs bekannt, wobei ein Dachrahmen des Verdecks einen vorderen Teil mit Seitenholmen und einem vorderen Dachteil aufweist. Der vordere Teil kann gegen einen Windschutzscheibenrahmen verspannt werden, an dem ein Widerlager angeordnet ist. Ein Verriegelungsmittel weist einen längsverschiebbar an den Seitenholmen angeordneten und einen keilförmigen Riegelteil umfassenden Schieberriegel auf, mit dem ein Gewindekabel in Antriebsverbindung steht, welches einen in dem Dachteil angeordneten Elektromotor nachgeschaltet ist.

Die DE 44 15 969 C2 offenbart einen Verschlussantrieb für ein Verdeck eines Kraftfahrzeugs, wobei das Verdeck ein an beiden Seiten symmetrisch gegenüberliegend angeordnetes Verdeckgestänge, dass einen Verdeckstoff trägt sowie ein vorderes Verdeckrahmenteil aufweist, welches an einem oberen Bereich eines Windschutzscheibenrahmens zu verriegeln ist. Der Verschlussantrieb ist in dem vorderen Verdeckrahmenteil untergebracht und besitzt einen etwa in der Mitte des vorderen Verdeckrahmenteils angebrachten Elektromotor, der über Gewindekabel zwei an den vorderen Verdeckrahmenteil angebrachte Verschlusseinheiten antreibt. Zum Verriegeln des Verdecks ergreift und umschließt ein Fang- und Verriegelungshaken eine Rolle, die an einem fest mit dem Windschutzscheibenrahmen verbundenen Zapfen gelagert ist.

Die DE 39 14 638 A1 offenbart ein Klappverdeck mit einem vorderen Verdeckrahmen und einem mit diesem um eine gemeinsame Anlenkachse schwenkbar verbundenen hinteren Verdeckrahmen, wobei am vorderen Verdeckrahmen ein Schwenkriegel gelagert ist, der über seinen einen Hebelarm mit einem Betätigungshebel zusammenwirkt, und mit seinem anderen Hebelarm mit einer an dem hinteren Verdeckrahmen angeordneten Raste zusammenwirkt.

Bei herkömmlichen Verdeckverschlüssen für ein Dach mit Verdeckstoff besteht oftmals das Problem, dass die Verschlüsse aufgrund der Verdeckstoffspannung und der Gestelltoleranzen einen großen Fangweg benötigen oder die Fangposition der Verdeckverschlüsse zu ungenau ist. Insbesondere ist wegen der Verdeckstoffspannung ein erhöhter Kraftaufwand erforderlich, um das Dach von dem Windschutzscheibenrahmen abzurücken oder es mit diesem in Eingriff zu bringen. Aber auch bei einem mehrteiligen Hardtop kann das Problem auftreten, dass zum Ver- und Entriegeln der Dachspitze große Kräfte bzw. Momente aufgebracht werden müssen.

Aus der DE 102 48 349 A1 ist ein Cabriolet-Fahrzeug mit einem gegenüber der Fahrzeugkarosserie beweglich gehaltenen Dach bekannt, welches ein vorderes Dachteil und ein mit diesem schwenkbar verbundenes rückwärtiges Dachteil aufweist. Die Dachteile sind für ihre Bewegung über seitlich an der Karosserie angeordnete Hauptlager schwenkbar und in die Karosserie oder aus dieser beweglich. Zur Festlegung des vorderen Dachteils am Windschutzscheibenrahmen sind Zapfen vorgesehen, die in Ausnehmungen des Windschutzscheibenrahmens eingreifen können. Jedem seitlichen Hauptlager ist ein Antrieb zugeordnet, über welchen das Hauptlager und damit das an diesem gehaltene Dach horizontal beweglich ist. Anschließend kann das Dach um die Lager verschwenkt werden.

Da die Hauptlager zusammen mit dem gesamten Dach über die Antriebe bewegt werden müssen, sind diese entsprechend leistungsstark auszulegen, was mit erhöhten Kosten verbunden ist.

Aus der gattungsgemäßen DE 197 37 031 A1 ist ein Klappverdeck mit einem vorderen Verdeckrahmen und einem hinteren Verdeckrahmen bekannt, wobei der vordere Verdeckrahmen in geschlossener Verdeckposition in Fahrzeuglängsrichtung zwischen dem hinteren Verdeckrahmen und einem Windschutzscheibenrahmen angeordnet ist. Der vordere Verdeckrahmen ist über einen Hebelmechanismus indirekt und über eine Schwenkachse direkt mit dem hinteren Verdeckrahmen verbunden. Eine Bewegung des vorderen Verdeckrahmens bei einer Überführung des Verdecks zwischen einer geschlossenen Position und einer offenen Position wird über einen Lenker umgesetzt, welcher einerseits mit dem Hebelmechanismus und andererseits mit einem über einen Hilfsmotor bewegbaren Verdeckgestänge verbunden ist. Um das Verdeck in geschlossener Position an dem Windschutzscheibenrahmen festzulegen, ist im Bereich des Windschutzscheibenrahmens ein Verschlussmechanismus mit einem Sperrelement vorgesehen, welches von einem elektrischen Linearmotor antreibbar ist. Das Sperrelement wird zur Verriegelung des Verdecks in Eingriff mit einem an dem vorderen Verdeckrahmen angeordneten Zapfen gebracht, so dass das Verdeck an dem Windschutzscheibenrahmen gesichert ist.

Ausgehend von diesem Stand der Technik liegt der Erfindung die Aufgabe zugrunde, ein Fahrzeug der eingangs genannten Art derart weiterzubilden, dass ein im Bereich des Windschutzscheibenrahmen oder im Bereich der Dachspitze benötigter Bauraum reduziert ist.

Diese Aufgabe wird erfindungsgemäß mit einem Fahrzeug nach Anspruch 1 gelöst. Bevorzugte Weiterbildungen sind in den Unteransprüchen gegeben.

Das erfindungsgemäße Fahrzeug, insbesondere Kraftfahrzeug, weist einen Fahrzeugaufbau mit den Merkmalen von Anspruch 1 auf.

Erfindungsgemäß ist dabei vorgesehen, dass eine Zwangsverriegelung des Daches an dem Windschutzscheibenrahmen in einen Gesamtablauf einer Dachkinematik integriert ist.

Dies hat den Vorteil, dass das Verdeck ohne separates Verschlusssystem im Bereich des Windschutzscheibenrahmens oder im Bereich der Dachspitze verriegelt werden kann. Somit ist eine Bauraumreduktion in der Dachspitze erzielbar, da kein zentraler Verschlussantrieb oder voluminöse Verdeckverschlussoberteile erforderlich sind.

Da bei dem erfindungsgemäßen Fahrzeug auf ein in der Dachspitze angeordnetes Verschlusssystem verzichtet werden kann, ist die Masse der Dachspitze gegenüber herkömmlichen Cabriolet-Fahrzeugen deutlich verringerbar. Diese Reduktion der Masse (sozusagen ein "fehlendes Verschlusssystem") bewirkt eine erhebliche Reduktion der Reaktionskräfte im Gestell. Allgemein funktionsabhängige Dachbewegungen im Bereich der Endlagen, z.B. "Dach fast verriegelt" oder "Dach bereit zum Öffnen", können aufgrund von kleineren Momenten in den Drehpunkten des Gestells die Gestellauslegung in dessen Dimensionierung günstig beeinflussen. Auch die "schwingende Masse", gesteuert über das Hauptlager, welches am anderen Ende eines herkömmlichen Verschlusses liegt, ist wesentlich geringer (Nachschwingen des Gestells bei Betätigung).

Wird gemäß der Erfindung der Steuerhebel relativ zu dem zweiten Dachteil verschwenkt, so wird das erste Dachteil relativ zum zweiten Dachteil versetzt, wobei das erste Dachteil relativ zur Führung und zum Windschutzscheibenrahmen verschoben und verschwenkt wird und somit von diesem abrückt. Das Abrücken des ersten Dachteils vom Windschutzscheibenrahmen kann durch weiteres Schwenken des Steuerhebels solange fortgesetzt werden, bis das erste Dachteil außer Eingriff mit der Führung steht. Das zweite Dachteil verbleibt während dieses Vorgangs in seiner Position, so dass zum Abrücken des Dachs von dem Windschutzscheibenrahmen bzw. von der Führung lediglich eine Bewegung des ersten Dachteils und des Steuerhebels erforderlich ist. Somit ist das Dach mit einem geringeren Kraftaufwand vom Windschutzscheibenrahmen abrückbar, als wenn dazu das ganze Dach bewegt werden müsste.

Durch ein Verschwenken des Steuerhebels ist es möglich, das Dach von einem geschlossenen Zustand, in dem das erste Dachteil mit der Führung in Eingriff steht, in einen teilweise geöffneten Zustand zu überführen, in dem das erste Dachteil außer Eingriff mit der Führung steht. Umgekehrt ist es möglich, das Dach von dem teilweise geöffneten Zustand in den geschlossenen Zustand zu überführen, indem der Steuerhebel in die entgegengesetzte Richtung relativ zum zweiten Dachteil verschwenkt wird.

Das erfindungsgemäße Versetzen des ersten Dachteils relativ zum zweiten Dachteil beim Öffnen des Dachs erfolgt insbesondere in einer einem Fahrgastinnenraum des Fahrzeugs abgewandten Richtung bzw. im Wesentlichen vertikal nach oben. Ferner kann das Abrücken des ersten Dachteils vom Windschutzscheibenrahmen in Richtung eines Fahrzeughecks bzw. im Wesentlichen horizontal nach hinten erfolgen.

Der Steuerhebel ist derart mit den beiden Dachteilen verbunden, dass eine Verschwenkung des Steuerhebels relativ zu einem der beiden Dachteile auch immer zu einer Verschwenkung des Steuerhebels relativ zu dem anderen der beiden Dachteile führt. Ferner ist der Steuerhebel bevorzugt mittels der beiden Lager derart mit den beiden Dachteilen verbunden, dass durch eine Verschwenkung des Steuerhebels relativ zu wenigstens einem der beiden Dachteile ein Abstand zwischen den beiden Dachteilen ausbildbar oder variierbar ist.

Die Schwenkachse des ersten Lagers ist insbesondere ortsfest zum ersten Dachteil angeordnet, wobei der Steuerhebel um diese Schwenkachse schwenkbar an dem ersten Dachteil gelagert ist. Bevorzugt verläuft dabei die Schwenkachse des ersten Lagers durch den Steuerhebel. Ferner ist die Schwenkachse des zweiten Lagers insbesondere ortsfest zum zweiten Dachteil angeordnet, wobei der Steuerhebel um diese Schwenkachse schwenkbar an dem zweiten Dachteil gelagert ist. Bevorzugt verläuft dabei die Schwenkachse des zweiten Lagers durch den Steuerhebel.

Die beiden Lager weisen insbesondere einen Abstand zueinander auf, der von dem Steuerhebel überbrückt wird. Dazu kann der Steuerhebel zwei einander gegenüberliegende Enden aufweisen, wobei ein erstes der beiden Enden mit dem ersten Lager und das zweite Ende mit dem zweiten Lager verbunden ist. Insbesondere ist der Steuerhebel als gerader Stab ausgebildet, aber auch gekrümmte oder abgewinkelte Steuerhebel sind möglich. Ferner kann der Steuerhebel in Form eines Schwanenhalses ausgebildet sein, dessen Kraftlinie (Wirklinie) z.B. linear (gerade) verläuft.

Das erste Dachteil ist mittels der Führung bevorzugt in einer Richtung verschiebbar geführt, die quer zu den Schwenkachsen der beiden Lager ausgerichtet ist. Ferner können die Schwenkachsen der beiden Lager auf einer gemeinsamen ersten Ebene liegen.

Die beiden Dachteile können im geschlossenen Zustand des Dachs einen Abstand zueinander aufweisen, der bevorzugt von dem Steuerhebel überbrückt wird. In diesem Fall kann die Schwenkachse des ersten Lagers auf einer sich durch den Abstand hindurch erstreckenden zweiten Ebene liegen, die senkrecht zur ersten Ebene ausgerichtet ist.

Die Schwenkachsen der beiden Lager verlaufen insbesondere parallel zueinander. Ferner ist möglich, dass die Schwenkachse des ersten Lagers einen Abstand zum ersten Dachteil und/oder die Schwenkachse des zweiten Lagers einen Abstand zum zweiten Dachteil aufweist. Bevorzugt verlaufen die Schwenkachsen der beiden Lager quer zur Fahrzeuglängsrichtung.

Der Steuerhebel ist mit dem ersten Dachteil bevorzugt unter Zwischenschaltung eines sich von diesem wegerstreckenden und das erste Lager aufweisenden Stellglieds oder Stellhebels verbunden, der insbesondere starr an dem ersten Dachteil befestigt ist. Der Stellhebel kann wenigstens zwei insbesondere starr miteinander verbundene Schenkel aufweisen und z.B. als gekrümmter oder abgewinkelter Hebel ausgebildet sein. Insbesondere ist der Stellhebel mit einem ersten seiner Schenkel an dem ersten Dachteil starr befestigt, wobei in oder an einem zweiten seiner Schenkel das erste Lager angeordnet ist. Ferner kann der zweite Schenkel gegenüber dem ersten Schenkel abgewinkelt sein und/oder sich von dem ersten Dachteil wegerstrecken.

Das zweite Lager kann an oder in einer starr am zweiten Dachrahmen befestigten Halterung angeordnet sein, die insbesondere auf einer dem Fahrgastinnenraum abgewandten Seite des zweiten Dachrahmens angeordnet ist.

Bevorzugt greift an dem Steuerhebel ein Antriebsmittel an, mittels welchem der Steuerhebel gegenüber dem zweiten Dachteil schwenkbar ist. Das Antriebsmittel ist bevorzugt in oder an dem Dach, insbesondere in oder an dem zweiten Dachteil angeordnet und kann als mechanischer Hebel oder als elektrisch, hydraulisch oder pneumatisch betätigter Antrieb ausgebildet sein. Da von dem Antriebsmittel nicht das gesamte Dach bewegt muss, kann das Antriebsmittel relativ klein ausgebildet und insbesondere in das Dach, bevorzugt in das zweite Dachteil integriert sein. Alternativ ist es möglich, den Steuerhebel über eine Zug-Druck-Mechanik (z.B. Gestänge oder Seil- bzw. Bowdenzug) aus dem C-Säulenbereich zu steuern, z.B. synchron mit der Verriegelung eines Verdeckdeckels und/oder einer Abfrage an der Führung bzw. an einer im geschlossenen Zustand des Dachs der Führung zugewandten Dachspitze. Die Abfrage kann dabei über einen im Bereich der Führung oder im Bereich der Dachspitze angeordneten Sensor erfolgen, von dem der geschlossene Zustand des Dachs erfassbar ist. Ferner kann das Antriebsmittel auch von einem Verdeckdeckelantrieb des Fahrzeugs gebildet sein, so dass zusätzlich zum Verdeckdeckelantrieb kein separates Antriebsmittel für den Steuerhebel erforderlich ist. Als Verdeckdeckel wird dabei der Deckel eines Verdeckkastens oder eines Kofferraums eines als Cabriolet ausgebildeten Fahrzeugs bezeichnet, je nachdem, ob das Verdeck in einem separaten Verdeckkasten oder im Kofferraum versenkt werden kann.

Ausgehend vom teilweise geöffneten Zustand kann das Dach in einen geöffneten Zustand überführt werden, wozu am Fahrzeugaufbau bevorzugt wenigstens eine über eine mechanische Verbindung mit dem ersten Dachteil verbundene Antriebsvorrichtung zumindest mittelbar befestigt ist, mittels welcher das erste Dachteil relativ zu dem zweiten Dachteil bewegbar bzw. schwenkbar ist. Die mechanische Verbindung wird dabei insbesondere von einem Gestänge und/oder von Seil- bzw. Bowdenzügen gebildet. Ferner kann das Dach mittels des zweiten Dachteils oder mittels wenigstens eines mit diesem verbundenen zusätzlichen Dachteils bewegbar an dem Fahrzeugaufbau zumindest mittelbar gelagert sein.

Bevorzugt ist an dem ersten Dachteil wenigstens ein Fangmittel befestigt, dass in eine in der Führung vorgesehene und zumindest einseitig offene Ausnehmung verschiebbar eingreift. Das erste Dachteil ist dabei über das Fangmittel verschiebbar und schwenkbar in der Ausnehmung gelagert und durch deren Öffnung hindurch außer Eingriff mit der Führung bringbar. Dabei kann das Fangmittel, z.B. über ein starr an diesem befestigtes Eingriffselement, selbst schwenkbar und verschiebbar in der Ausnehmung gelagert sein. Alternativ umfasst das Fangmittel ein an diesem drehbar befestigtes Eingriffselement, welches verschiebbar in die Ausnehmung eingreift. Ferner weist die Ausnehmung insbesondere eine ausgezeichnete Längserstreckung auf, entlang welcher das Fangmittel verschiebbar geführt ist, wobei die Ausnehmung bevorzugt einen einseitig offenen Schlitz bildet.

Damit das erste Dachteil im teilweise geöffneten Zustand nicht in den Fahrgastinnenraum einschwenkt, ist bevorzugt eine Dachhalterung vorgesehen, mittels welcher das erste Dachteil im teilweise geöffnetem Zustand gehalten wird. Diese Dachhalterung kann von dem Gestänge gebildet sein. Bevorzugt ist an der Führung aber eine außerhalb der Ausnehmung angeordnete und die Dachhalterung bildende Auflage befestigt, auf der das erste Dachteil oder das Fangmittel im teilweise geöffneten Zustand des Dachs aufliegt. Die Auflage schließt sich insbesondere an die Ausnehmung an und ist bevorzugt einstückig mit der Führung ausgebildet.

Das Dach kann ein Verdeckgestell mit wenigstens zwei Dachrahmen aufweisen, wobei jedes der beiden Dachteile von jeweils einem der Dachrahmen gebildet ist. Ferner ist es möglich, das Verdeckgestell oder die Dachrahmen mit einem flexiblen Material wie z. B. mit einem Verdeckstoff zu bespannen. Alternativ ist das Dach als mehrteiliges Hardtop ausbildbar.

Beim Schließen des Dachs kann der Verdeckstoff erst zum Schluss gespannt werden, so dass die Dachspitze auf die bevorzugt als Kulissenführung ausgebildete Führung bzw. auf die Auflage sicher aufsetzt. Insbesondere wird der Verdeckstoff erst dann gespannt, nachdem das Fangmittel auf der Auflage aufliegt und das Dach von dem teilweise geöffneten Zustand in den geschlossenen Zustand überführt wird. Anstelle eines herkömmlichen und im Bereich der Dachspitze angeordneten Verschlusssystems kann eine Kulisse-Steuerhebel-Antriebsmittel-Kombination die Zwangsverriegelung des Dachs übernehmen. Dabei können auch die beiden Dachrahmen gegeneinander verriegelt werden. Der seitliche Strak ist dann in eine ideale Lage bringbar.

Ferner ist es möglich, eine Dachverriegelung über eine Dachkinematik mit Kulissenführung und einem bevorzugt als Hydraulikzylinder ausgebildeten Antriebsmittel zu schaffen, wobei das an der Dachspitze angeordnete und insbesondere als Fangrolle ausgebildete Fangmittel in die Kulissenführung eingreift. Das im Verdeckgestell befindliche Antriebsmittel drückt den z.B. in Übertotpunktlage befindlichen und/oder mittels einer Verriegelungsvorrichtung ver-/entriegelbaren Steuerhebel hoch und versetzt den ersten Dachrahmen relativ zu dem zweiten Dachrahmen. Ein gegebenenfalls vorhandener Verdeckstoff wird dabei entspannt, wobei die bevorzugt an der Dachspitze angeordnete Fangrolle aus der Kulissenführung am Windschutzscheibenrahmen gezogen wird. Hat der Steuerhebel über das Antriebsmittel eine Endlage erreicht, wird das Verdeckgestell über wenigstens eine insbesondere als Hauptlagerzylinder ausgebildete Antriebsvorrichtung in die komplett geöffnete Lage gebracht. Die Antriebsvorrichtung kann als hydraulischer oder pneumatischer Antrieb ausgebildet sein. Alternativ ist die Antriebsvorrichtung als elektrischer Antrieb ausgebildet, so dass eine vollelektrische Verfahrbarkeit des Verdeckgestänges erzielbar ist.

Das erfindungsgemäße Fahrzeug kann ferner eine am Windschutzscheibenrahmen befestigte zweite Führung aufweisen, wobei das erste Dachteil mit der zweiten Führung lösbar in Eingriff steht und an dieser verschiebbar und schwenkbar geführt ist. Ferner kann das erste Dachteil mit dem zweiten Dachteil zusätzlich über einen zweiten Steuerhebel verbunden sein, der mittels eines dritten Lagers schwenkbar an dem ersten Dachteil und mittels eines vierten Lagers schwenkbar an dem zweiten Dachteil befestigt ist. Auch der zweite Steuerhebel ermöglicht ein Versetzen des ersten Dachteils gegenüber dem zweiten Dachteil.

Die zweite Führung, der zweite Steuerhebel, das dritte Lager und das vierte Lager können dabei analog zu der (ersten) Führung, dem (ersten) Steuerhebel, dem ersten Lager bzw. dem zweiten Lager weitergebildet sein. Insbesondere ist auch der zweite Steuerhebel unter Zwischenschaltung eines starr am ersten Dachrahmen befestigten zweiten Stellhebels mit dem ersten Dachrahmen verbunden, wobei der zweite Stellhebel das dritte Lager aufweisen und analog zum (ersten) Stellhebel weitergebildet sein kann. Entsprechendes gilt für eine bevorzugt an dem zweiten Dachrahmen starr befestigte zweite Halterung, die insbesondere des vierte Lager aufweist.

Die Erfindung wird nachfolgend anhand einer bevorzugten Ausführungsform unter Bezugnahme auf die Zeichnung beschrieben. In der Zeichnung zeigen:
- Fig. 1:: eine teilweise schematische Seitenansicht einer Ausführungsform des erfindungsgemäßen Fahrzeugs mit geschlossenem Dach,
- Fig. 2:: eine schematische Seitenansicht der Ausführungsform mit geschlossenem Dach und Hydraulikzylinder,
- Fig. 3:: eine schematische Seitenansicht der Ausführungsform in einem ersten geschwenkten Zustand des Steuerhebels,
- Fig. 4:: eine schematische Seitenansicht der Ausführungsform im ersten geschwenkten Zustand des Steuerhebels mit Hydraulikzylinder,
- Fig. 5:: eine schematische Seitenansicht der Ausführungsform in einem zweiten geschwenkten Zustand des Steuerhebels,
- Fig. 6:: eine schematische Seitenansicht der Ausführungsform im zweiten geschwenkten Zustand des Steuerhebels mit Hydraulikzylinder,
- Fig. 7:: eine schematische Seitenansicht der Ausführungsform in einem ersten angehobenen Zustand des Dachs,
- Fig. 8:: eine schematische Seitenansicht der Ausführungsform in einem zweiten angehobenen Zustand des Dachs,
- Fig. 9:: eine schematische Seitenansicht der Ausführungsform im zweiten angehobenen Zustand des Dachs mit Gestänge,
- Fig. 10:: eine schematische Seitenansicht der Ausführungsform im zweiten angehobenen Zustand des Dachs mit Hydraulikzylinder,
- Fig. 11:: eine perspektivische Darstellung der Ausführungsform mit vollständig geöffnetem Dach und
- Fig. 12:: eine perspektivische Teilansicht des Verdeckgestells gemäß der Ausführungsform.

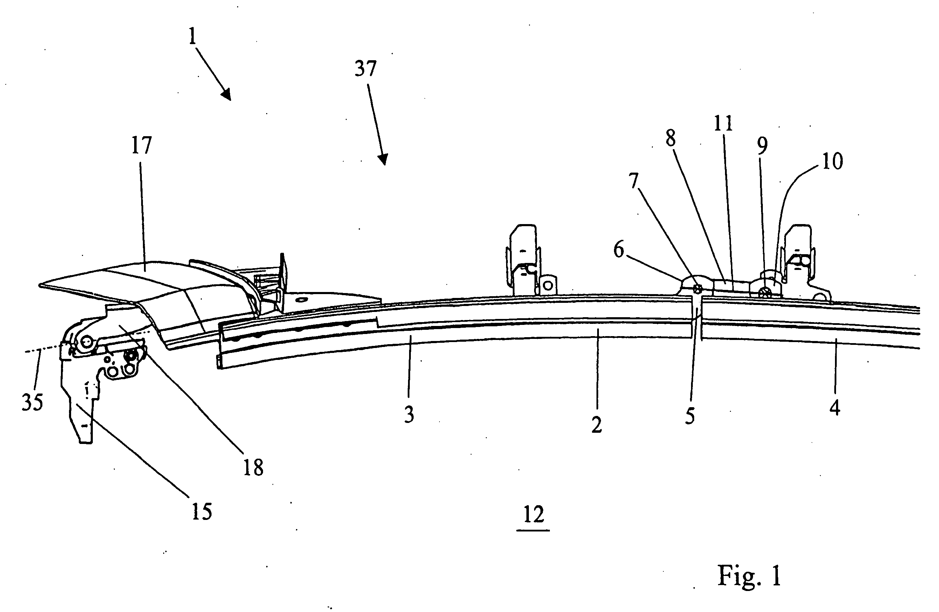

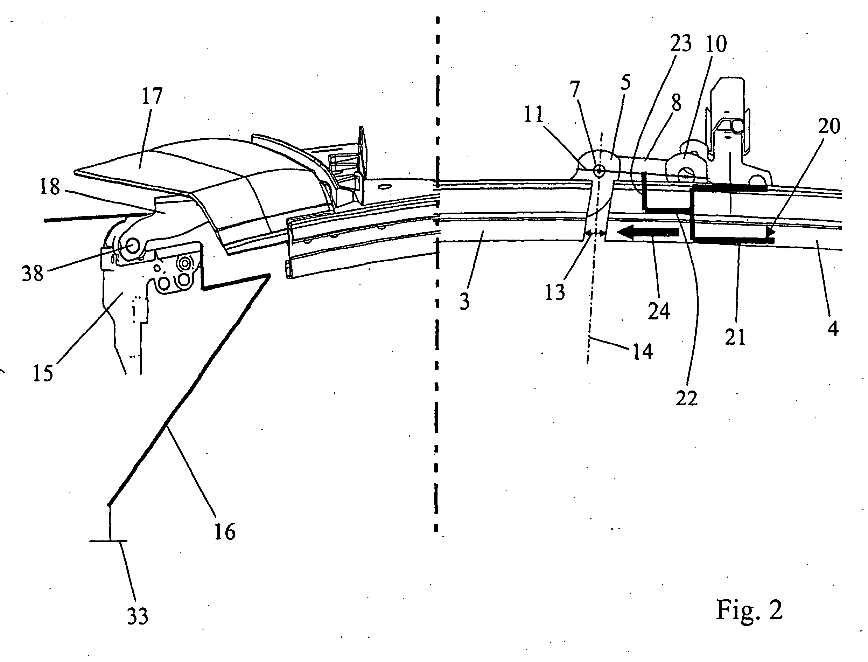

Aus den Fig. 1 und 2 ist eine teilweise schematische Seitenansicht eines als Cabriolet ausgebildeten Kraftfahrzeugs 1 ersichtlich, welches ein Dach 37 mit einem Verdeckgestell 2 aufweist, das einen ersten Dachrahmen 3 und einen zweiten Dachrahmen 4 umfasst. Am ersten Dachrahmen 3 ist ein Stellhebel 5 starr befestigt, der sich mit einem abgewinkelten Bereich bzw. Schenkel 6 von dem ersten Dachrahmen 3 wegerstreckt. In dem abgewinkelten Bereich 6 ist ein erstes Schwenklager 7 angeordnet, mittels welchem ein Ende eines Steuerhebels 8 schwenkbar an dem Stellhebel 5 gelagert ist. Das andere Ende des hier insgesamt gerade ausgebildeten Steuerhebels 8 ist mittels eines zweiten Schwenklagers 9 schwenkbar an einer Halterung 10 gelagert, die an dem zweiten Dachrahmen 4 starr befestigt ist. Die Schwenkachsen der beiden Schwenklager 7 und 9 sind parallel zueinander ausgerichtet und liegen auf einer gemeinsamen Ebene 11, die senkrecht zur Zeichenebene verläuft. Ferner sind die Schwenkachsen der beiden Schwenklager 7 und 9 senkrecht zur Zeichenebene ausgerichtet und auf einer einem Fahrgastinnenraum 12 des Kraftfahrzeugs 1 abgewandten Seite des Verdeckgestells 2 angeordnet. Dabei weist die Schwenkachse des ersten Schwenklagers 7 einen Abstand zum ersten Dachrahmen 3 und die Schwenkachse des zweiten Schwenklagers 9 einen Abstand zum zweiten Dachrahmen 4 auf. Ferner ist zwischen dem ersten Dachrahmen 3 und dem zweiten Dachrahmen 4 ein Abstand 13 vorgesehen, durch welchen hindurch sich eine senkrecht zur Ebene 11 ausgerichtete zweite Ebene 14 erstreckt, auf der die Schwenkachse des ersten Schwenklagers 7 liegt.

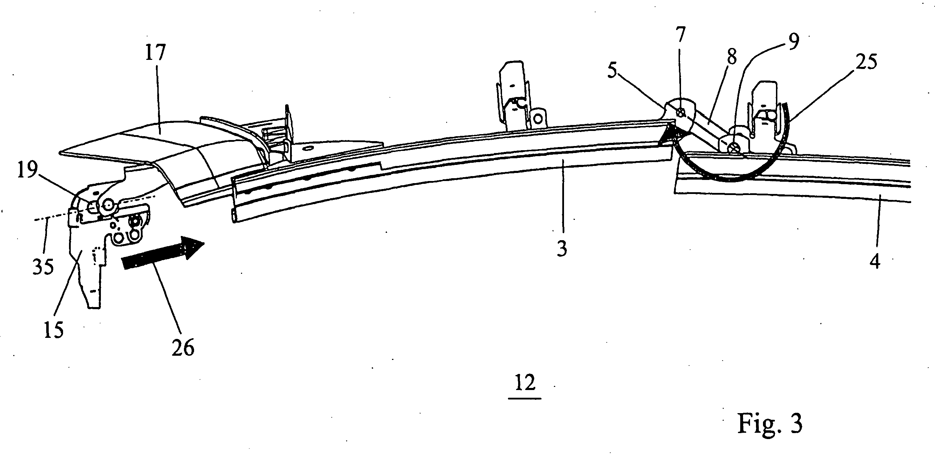

Der erste Dachrahmen 3 ist zwischen dem zweiten Dachrahmen 4 und einer Kulissenführung 15 angeordnet, die an einem Windschutzscheibenrahmen 16 befestigt ist, der an einem schematisch dargestellten Fahrzeugaufbau 33 des Kraftfahrzeugs 1 festgelegt ist. Der erste Dachrahmen 3 ist somit auch zwischen dem Windschutzscheibenrahmen 16 und dem zweiten Dachrahmen 4 angeordnet. Ferner ist am ersten Dachrahmen 3 an seiner dem zweiten Dachrahmen 4 abgewandten Stirnseite eine Dachspitze 17 befestigt, an der ein Fangmittel 18 festgelegt ist. Das Fangmittel 18 weist ein bevorzugt als Rolle ausgebildetes Eingriffselement 38 auf und greift mit diesem in eine in der Kulissenführung 15 vorgesehene, einseitig offene und eine ausgezeichnete Längserstreckung 35 aufweisende Ausnehmung 19 (siehe Fig. 3) ein, so dass das Fangmittel 18 in der Ausnehmung 19 schwenkbar und in Richtung der Längserstreckung 35 verschiebbar gelagert ist. Das Fangmittel 18 mit dem als Rolle ausgebildeten Eingriffselement 38 wird nachfolgend auch als Fangrolle bezeichnet.

In dem zweiten Dachrahmen 4 ist ein insbesondere als Hydraulikzylinder 20 ausgebildetes Antriebsmittel angeordnet, welches ein an dem zweiten Dachrahmen 4 befestigtes Gehäuse 21 und einen in diesem verschiebbar geführten Kolben 22 aufweist, der über eine schematisch dargestellte mechanische Verbindung 23 derart mit dem Steuerhebel 8 verbunden ist, dass eine Verschiebung des Kolbens 22 in Richtung des Pfeils 24 zu einer Verschwenkung des Steuerhebels 8 relativ zu dem zweiten Dachrahmen 4 um die Schwenkachse des zweiten Lagers 9 in Richtung des Pfeils 25 (siehe Fig. 3) führt.

In dem aus den Fig. 1 und 2 ersichtlichen, vollständig geschlossenen Zustand des Dachs 37 bzw. des Verdeckgestells 2 ist der erste Dachrahmen 3 zwischen der Kulissenführung 15 und dem zweiten Dachrahmen 4 gesichert. Insbesondere liegt die Längserstreckung 35 der Ausnehmung 19 auf einer Geraden, die einen derartigen Winkel mit der ersten Ebene 11 einschließt, dass an den ersten Dachrahmen 3 angreifende und in Richtung des Pfeils 26 (siehe Fig. 3) wirkende Kräfte den Steuerhebel 8 nicht verschwenken können. Der Pfeil 26 verläuft dabei parallel zur Längserstreckung 35. Dieses Verhalten kann als Selbsthemmung bezeichnet werden, so dass der erste Dachrahmen 3 gegen ein versehentliches Abrücken von der Kulissenführung 15 gesichert ist. Erst wenn durch Schwenken des Steuerhebels 8 in Richtung des Pfeils 25 die Schwenkachse des ersten Lagers 7 einen Todpunkt überschritten hat, könnte eine an dem ersten Dachrahmen 3 angreifende und in Richtung des Pfeils 26 wirkende Kraft den ersten Dachrahmen 3 von der Führung 15 abrücken und den Steuerhebel 8 relativ zu den beiden Dachrahmen 3 und 4 schwenken, sofern das Antriebsmittel 20 dies zulässt. Bevorzugt wirkt das Antriebsmittel 20 aber einer Verschwenkung des Steuerhebels 8 relativ zum zweiten Dachrahmen 4 entgegen, wenn diese Verschwenkung nicht von dem Antriebsmittel 20 selbst bewirkt wird. Alternativ oder ergänzend kann der Steuerhebel 8 durch eine separate Ver- und Entriegelungsvorrichtung (nicht gezeigt) gegenüber einem Verschwenken relativ zu dem ersten und/oder zweiten Dachrahmen 3, 4 gesichert sein. Zum Öffnen des Dachs 37 müsste diese Ver- und Entriegelungsvorrichtung den Steuerhebel 8 dann erst freigeben. Ferner ist es möglich, an der Kulissenführung 15 und/oder an der Fangrolle 18 eine separate Ver- und Entriegelungsvorrichtung (nicht gezeigt) vorzusehen, mittels welcher die Fangrolle 18 gegenüber einer Verschiebung relativ zu der Kulissenführung 15 gesichert ist. Auch hier müsste diese Ver- und Entriegelungsvorrichtung die Fangrolle 18 zum Öffnen des Dachs 37 erst freigeben.

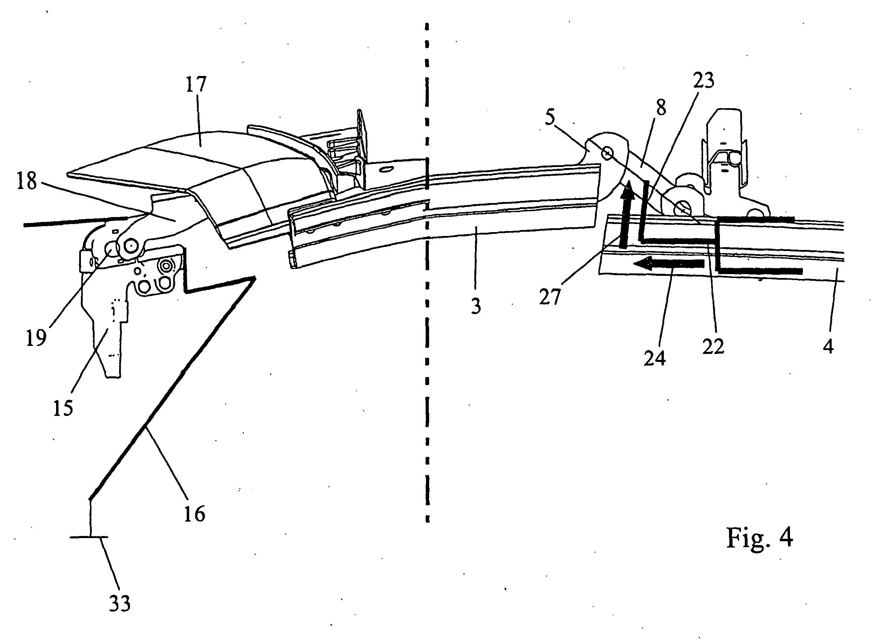

Wie aus den Fig. 3 und 4 ersichtlich, führt eine Verschwenkung des Steuerhebels 8 in Richtung des Pfeils 25 um die Schwenkachse des zweiten Schwenklagers 9 relativ zu dem zweiten Dachrahmen 4 zu einer Verschwenkung des ersten Dachrahmens 3 relativ zum Steuerhebel 8 um die Schwenkachse des ersten Schwenklagers 7, wobei der erste Dachrahmen 3 gegenüber dem zweiten Dachrahmen 4 in einer dem Fahrgastinnenraum 12 abgewandten Richtung versetzt wird. Ferner führt die Verschwenkung des ersten Dachrahmens 3 dazu, dass die Fangrolle 18 in der Ausnehmung 19 der Kulissenführung 15 in Richtung des Pfeils 26 relativ zu dem Windschutzscheibenrahmen 16 verschoben wird. Die Fangrolle 18 greift hier aber noch in die Ausnehmung 19 ein. Zusätzlich wird die Fangrolle 18 bzw. der erste Dachrahmen 3 dabei gegenüber der Kulissenführung 15 verschwenkt. Bei diesem Bewegungsvorgang wird der erste Dachrahmen 3 von der Kulissenführung 15 bzw. von dem Windschutzscheibenrahmen 16 abgerückt und der Steuerhebel 8 in eine Lage oberhalb des Todpunkts gebracht.

Aus Fig. 4 ist ersichtlich, dass durch die Bewegung des Kolbens 22 in Richtung des Pfeils 24 die mechanische Verbindung 23 eine Kraft in Richtung des Pfeils 27 auf den Steuerhebel 8 ausübt, woraus die Schwenkbewegung des Steuerhebels 8 gegenüber dem zweiten Dachrahmen 4 um die Schwenkachse des zweiten Schwenklagers 9 in Richtung des Pfeils 25 resultiert.

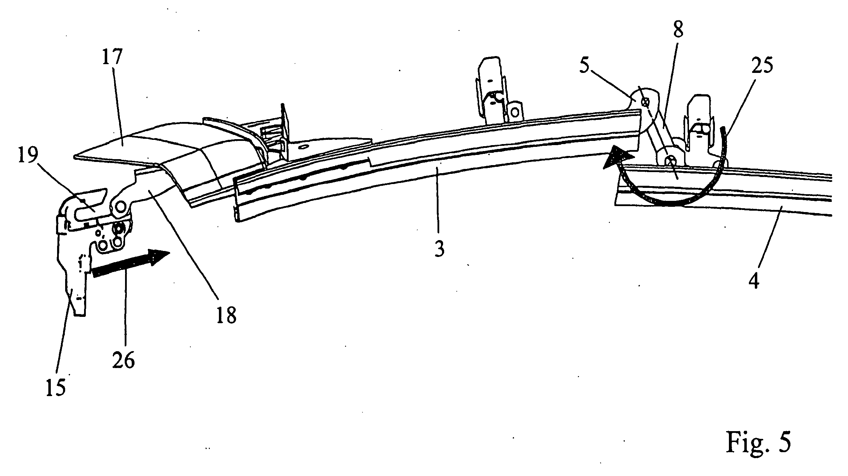

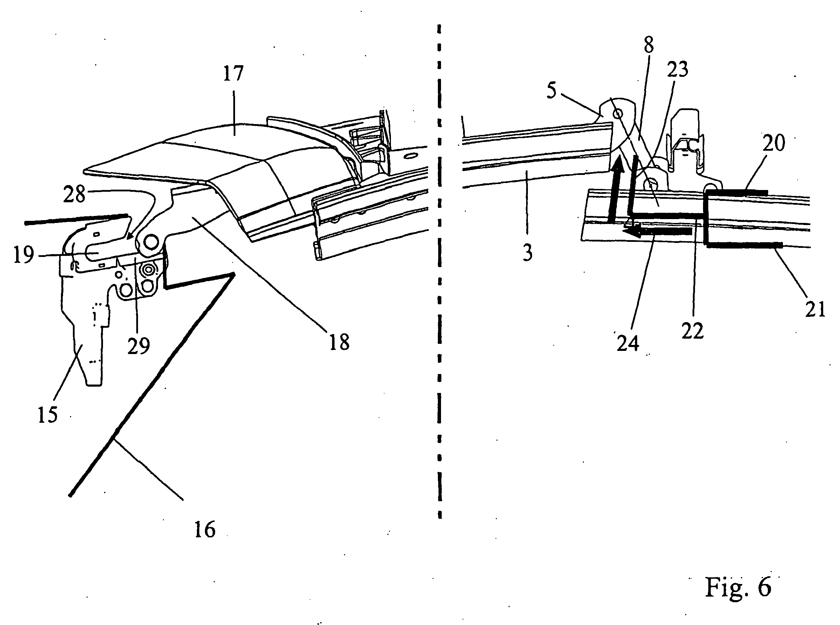

Die Fig. 5 und 6 zeigen den Steuerhebel 8 in einer Endstellung, in der die Fangrolle 18 aus der Ausnehmung 19 durch deren Öffnung 28 hindurch herausgeschoben ist. Die Fangrolle 18 steht nun nicht mehr im Eingriff mit der Kulissenführung 15 und liegt auf einer einteilig mit dieser ausgebildeten Auflage 29 auf. Die Endstellung des Steuerhebels 8 kann dabei durch einen Anschlag (nicht gezeigt) und/oder durch das Antriebsmittel 20 definiert sein.

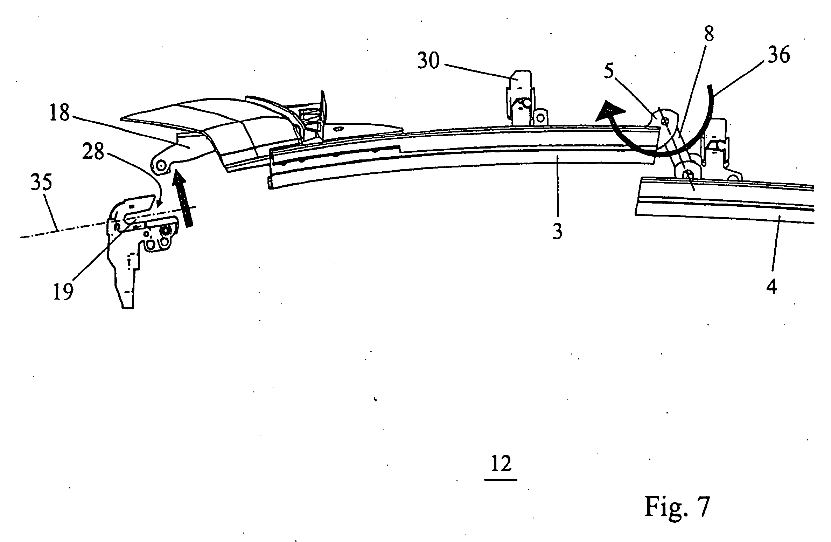

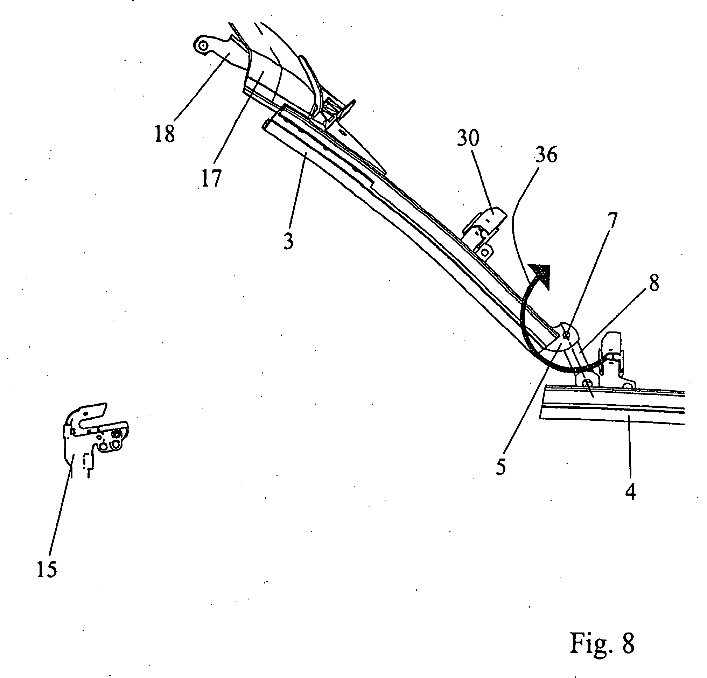

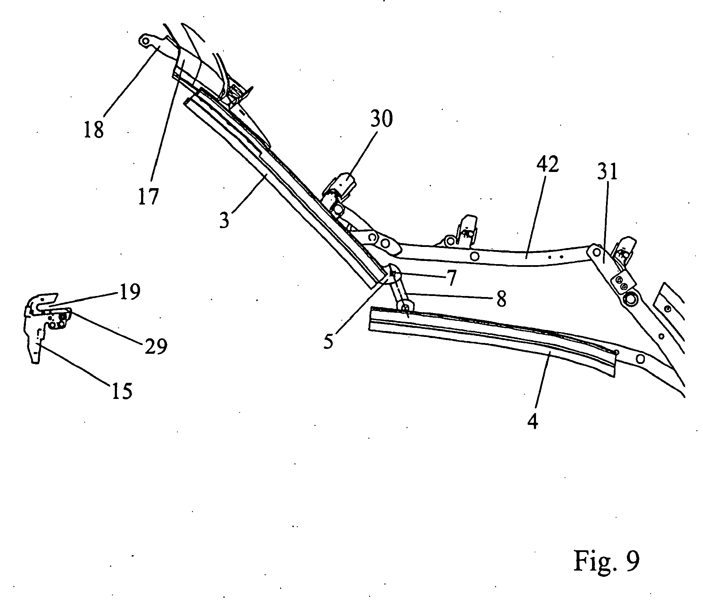

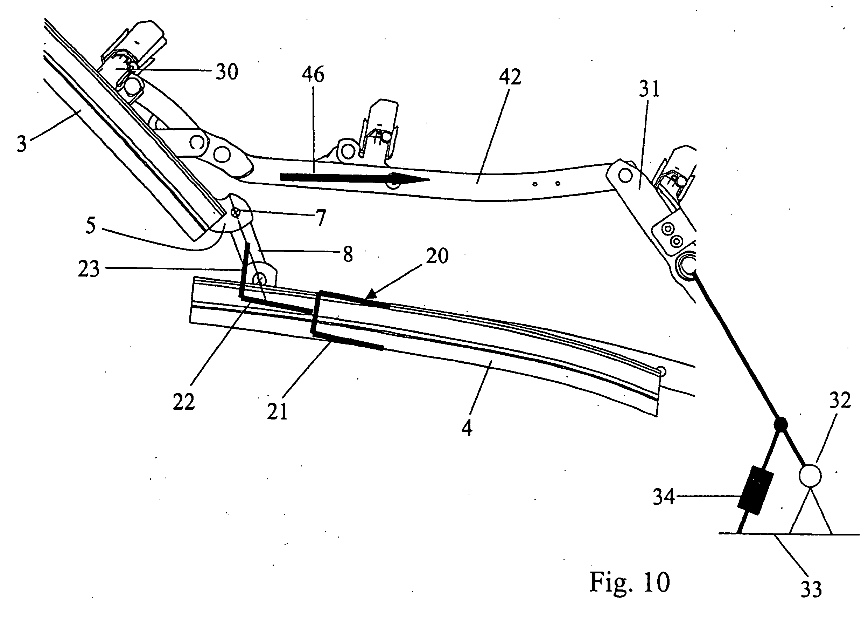

Aus den Fig. 7 bis 10 ist ersichtlich, dass an dem ersten Dachrahmen 3 auf der dem Fahrgastinnenraum 12 abgewandten Seite eine Gestängehalterung 30 befestigt ist, an der ein Gestänge 31 angreift, welches eine mit der Gestängehalterung 30 verbundene Stange 42 aufweist. Das Gestänge 31 ist über ein Lager 32 schwenkbar am Fahrzeugaufbau 33 gelagert und über eine zumindest mittelbar an diesem befestigte, mit dem Gestänge 31 verbundene und insbesondere als elektrischer Antrieb oder als Hydraulikzylinder ausgebildete Antriebsvorrichtung 34 bewegbar. Das Lager 32, der Fahrzeugaufbau 33, die Antriebsvorrichtung 34 sowie die Verbindungen zwischen diesen Elementen und zu dem Gestänge 31 sind dabei lediglich schematisch dargestellt. Über eine von der Antriebsvorrichtung 34 bewirkte Bewegung des Gestänges 31 bzw. der Stange 42 in Richtung des Pfeils 46 wird der erste Dachrahmen 3 um die Schwenkachse des ersten Schwenklagers 7 relativ zum Steuerhebel 8 bzw. zu dem zweiten Dachrahmen 4 in Richtung des Pfeils 36 geschwenkt. Dabei oder danach kann das Verdeckgestell 2 zusammengeklappt und in einem Verdeckkasten oder Kofferraum des Kraftfahrzeugs 1 versenkt werden.

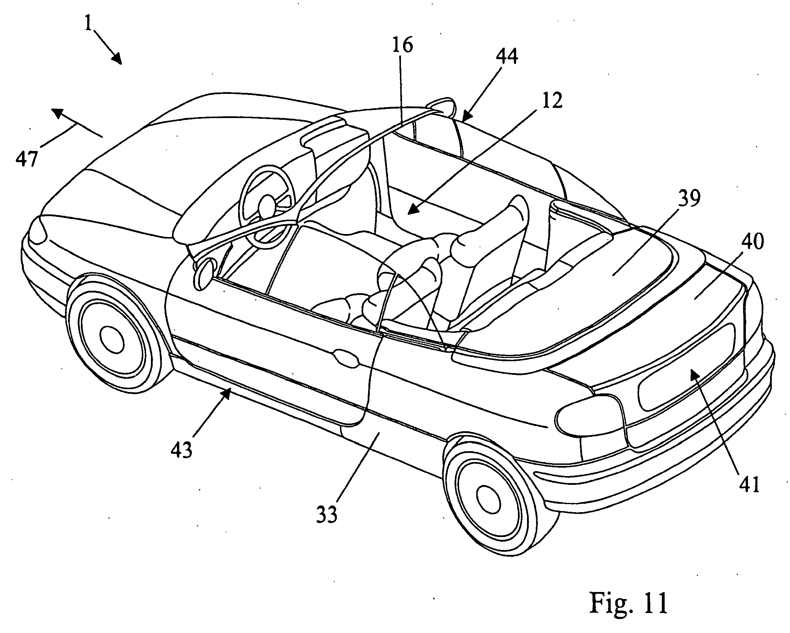

Aus den Fig. 1 bis 10 ist das Verdeckgestell 2 lediglich von einer linken Seite 43 (siehe Fig. 11) des Kraftfahrzeugs 1 her dargestellt. Auf der aus den Fig. 1 bis 10 nicht ersichtlichen, der linken Seite 43 gegenüberliegenden rechten Seite 44 (siehe Fig. 11) des Kraftfahrzeugs 1 kann das Verdeckgestell 2 mit einem zweiten Steuerhebel versehen sein, der in gleicher Art und Weise an den beiden Dachrahmen 3 und 4 wie der Steuerhebel 8 gelagert ist. Auch der zweite Steuerhebel kann über ein auf der rechten Seite 44 in dem zweiten Dachrahmen 3 angeordnetes und insbesondere als Hydraulikzylinder ausgebildetes zweites Antriebsmittel schwenkbar sein. Alternativ ist das zweite Antriebsmittel, wie auch das Antriebsmittel 20, als elektrischer oder pneumatischer Antrieb ausbildbar. Ferner ist bevorzugt.auf der rechten Seite 44 an der Dachspitze 17 eine zweite Fangrolle befestigt, die mit einer insbesondere auf der rechten Seite 44 an dem Windschutzscheibenrahmen 16 festgelegten zweiten Kulissenführung auf die gleiche Art und Weise zusammenwirken kann, wie die Fangrolle 18 mit der Kulissenführung 15.

Zusätzlich kann auf der rechten Seite 44 der erste Dachrahmen 3 über eine zweite Gestängehalterung und ein zweites Gestänge mit einer zweiten Antriebsvorrichtung verbunden sein, die bevorzugt zumindest mittelbar am Fahrzeugaufbau 33 befestigt und insbesondere als elektrischer Antrieb oder als Hydraulikzylinder ausgebildet sein kann. Dabei ist das zweite Gestänge über ein zweites Gestängelager mit dem Fahrzeugaufbau 33 verbindbar.

Aus Fig. 11 ist eine perspektivische Ansicht des Kraftfahrzeugs 1 in einem vollständig geöffneten Zustand des Dachs 37 ersichtlich, welches in einem von einem Verdeckkastendeckel 39 verschlossenen Verdeckkasten versenkt ist. Der Verdeckkastendeckel 39 und ein einen Kofferraum verschließender Kofferraumdeckel 40 sind dabei im Heckbereich 41 des Kraftfahrzeugs 1 angeordnet. Ferner ist die Fahrzeuglängsrichtung bzw. Fahrtrichtung mit dem Pfeil 47 angedeutet.

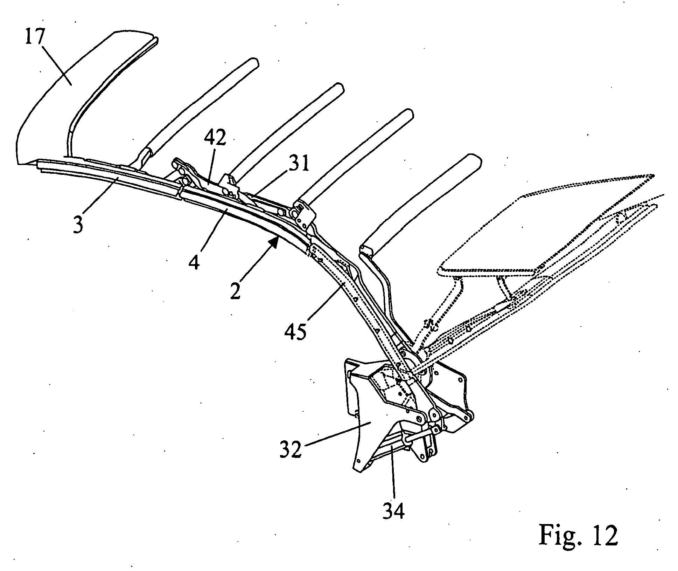

Aus Fig. 12 ist eine perspektivische Teilansicht des Verdeckgestells 2 ersichtlich, wobei der Steuerhebel 8 aus Gründen der Übersichtlichkeit nicht dargestellt ist. Ferner ist zwischen dem zweiten Dachrahmen 4 und dem Lager 32 noch ein dritter Dachrahmen 45 angeordnet.

### BEZUGSZEICHENLISTE

- 1: Fahrzeug
- 2: Verdeckgestell
- 3: erster Dachrahmen
- 4: zweiter Dachrahmen
- 5: Stellhebel
- 6: abgewinkelter Bereich des Stellhebels
- 7: erstes Schwenklager
- 8: Steuerhebel
- 9: zweites Schwenklager
- 10: Halterung
- 11: erste Ebene
- 12: Fahrgastinnenraum
- 13: Abstand zwischen den Dachrahmen
- 14: zweite Ebene
- 15: Kulissenführung
- 16: Windschutzscheibenrahmen
- 17: Dachspitze
- 18: Fangrolle
- 19: Ausnehmung
- 20: Hydraulikzylinder
- 21: Gehäuse des Hydraulikzylinders
- 22: Kolben des Hydraulikzylinders
- 23: mechanische Verbindung
- 24: Pfeil
- 25: Pfeil
- 26: Pfeil
- 27: Pfeil
- 28: Öffnung der Ausnehmung
- 29: Auflage
- 30: Gestängehalterung
- 31: Gestänge
- 32: Lager für Gestänge
- 33: Fahrzeugaufbau
- 34: Antriebsvorrichtung
- 35: Längserstreckung der Ausnehmung
- 36: Pfeil
- 37: Dach
- 38: Eingriffselement der Fangrolle
- 39: Verdeckkastendeckel
- 40: Kofferraumdeckel
- 41: Fahrzeugheck
- 42: Stange des Gestänges
- 43: linke Seite des Kraftfahrzeugs
- 44: rechte Seite des Kraftfahrzeugs
- 45: dritter Dachrahmen
- 46: Pfeil
- 47: Fahrzeuglängsrichtung

## Patentansprüche

1. Fahrzeug mit einem Fahrzeugaufbau (33), einem an diesem befestigten Windschutzscheibenrahmen (16), einem am Fahrzeugaufbau (33) bewegbar gelagerten Dach (37), welches wenigstens zwei miteinander verbundene und relativ zueinander bewegbare Dachteile (3, 4) aufweist, und wenigstens einer am Windschutzscheibenrahmen (16) befestigten Führung (15), wobei ein erstes der Dachteile (3), an dem eine Dachspitze (17) befestigt ist, zwischen dem Windschutzscheibenrahmen (16) und einem zweiten der Dachteile (4) angeordnet ist und mit der Führung (15) lösbar in Eingriff steht, wobei das erste Dachteil (3) mit dem zweiten Dachteil (4) gegenüber diesem versetzbar über wenigstens einen Steuerhebel (8) verbunden ist, der mittels eines ersten Lagers (7) schwenkbar an dem ersten Dachteil (3) und mittels eines zweiten Lagers (9) schwenkbar an dem zweiten Dachteil (4) befestigt ist,
**dadurch gekennzeichnet, dass**
das erste Dachteil (3) an der Führung (15) verschiebbar und schwenkbar geführt ist, wobei während das erste Dachteil (3) durch eine Verschwenkung des Steuerhebels (8) gegenüber dem zweiten Dachteil (4) relativ zur Führung (15) und zum Windschutzscheibenrahmen (16) verschoben und verschwenkt wird, das zweite Dachteil (4) während dieses Vorgangs in seiner Position verbleibt.

2. Fahrzeug nach Anspruch 1,
**dadurch gekennzeichnet, dass**
der Steuerhebel (8) mittels der beiden Lager derart mit den beiden Dachteilen (3, 4) verbunden ist, dass durch eine Verschwenkung des Steuerhebels (8) relativ zu wenigstens einem der beiden Dachteile (3, 4) ein Abstand zwischen den beiden Dachteilen (3, 4)

3. Fahrzeug nach Anspruch 1 oder 2,
**dadurch gekennzeichnet, dass**
das erste Dachteil (3) mittels der Führung (15) in einer Richtung (35) verschiebbar geführt ist, die quer zu den Schwenkachsen der beiden Lager (7, 9) ausgerichtet ist.

4. Fahrzeug nach einem der vorangehenden Ansprüche,
**dadurch gekennzeichnet, dass**
die Schwenkachsen der beiden Lager (7, 9) auf einer gemeinsamen ersten Ebene (11) liegen.

5. Fahrzeug nach einem der vorangehenden Ansprüche,
**dadurch gekennzeichnet, dass**
die beiden Dachteile (3,4) zwischen einem vorderen Ende des zweiten Dachteils (4) und einem hinteren Ende des ersten Dachteils (3) in geschlossenem Zustand des Daches (37) einen Abstand (13) aufweisen. ausbildbar oder variierbar ist.

6. Fahrzeug nach Anspruch 4 und 5,
**dadurch gekennzeichnet, dass**
die Schwenkachse des ersten Lagers (7) auf einer sich durch den Abstand (13) hindurch erstreckenden zweiten Ebene (14) liegt, die senkrecht zur ersten Ebene (13) ausgerichtet ist.

7. Fahrzeug nach einem der vorangehenden Ansprüche,
**dadurch gekennzeichnet, dass**
die Schwenkachsen der beiden Lager (7, 9) parallel zueinander verlaufen.

8. Fahrzeug nach einem der vorangehenden Ansprüche,
**dadurch gekennzeichnet, dass**
der Steuerhebel (8) mit dem ersten Dachteil (3) unter Zwischenschaltung eines sich von diesem wegerstreckenden und das erste Lager (7) aufweisenden Stellglieds (5) verbunden ist, welches starr an dem ersten Dachteil (3) befestigt ist.

9. Fahrzeug nach einem der vorangehenden Ansprüche,
**dadurch gekennzeichnet dass**,
an dem Steuerhebel (8) ein Antriebsmittel (20) angreift, mittels welchem der Steuerhebel (8) relativ zu wenigstens einem der beiden Dachteile (3, 4) schwenkbar ist.

10. Fahrzeug nach Anspruch 9,
**dadurch gekennzeichnet dass**,
das Antriebsmittel (20) an oder in dem zweiten Dachteil (4) befestigt ist.

11. Fahrzeug nach einem der vorangehenden Ansprüche,
**dadurch gekennzeichnet dass**,
am Fahrzeugaufbau (33) wenigstens eine über ein Gestänge (31) mit dem ersten Dachteil (3) verbundene Antriebsvorrichtung (34) zumindest mittelbar befestigt ist, mittels welcher das erste Dachteil (3) relativ zu dem zweiten Dachteil (4) bewegbar ist.

12. Fahrzeug nach einem der vorangehenden Ansprüche,
**dadurch gekennzeichnet dass**,
das Dach (37) mittels des zweiten Dachteils (4) oder mittels wenigstens eines mit diesem verbundenen zusätzlichen Dachteils (45) bewegbar an dem Fahrzeugaufbau (33) zumindest mittelbar befestigt ist.

13. Fahrzeug nach einem der vorangehenden Ansprüche,
**dadurch gekennzeichnet dass**,
an dem ersten Dachteil (3) wenigstens ein Fangmittel (18) befestigt ist, das in eine in der Führung (15) vorgesehene und zumindest einseitig offene Ausnehmung (19) verschiebbar eingreift.

14. Fahrzeug nach Anspruch 13,
**dadurch gekennzeichnet, dass**
an der Führung (15) eine Auflage (29) für das Fangmittel (18) vorgesehen ist.

15. Fahrzeug nach einem der vorangehenden Ansprüche,
**dadurch gekennzeichnet, dass**
das Dach (37) ein Verdeckgestell (2) mit wenigstens zwei Dachrahmen (3, 4) aufweist, von denen die beiden Dachteile gebildet sind.

## Claims

1. A vehicle comprising a vehicle body (33), a windscreen frame (16) mounted to said vehicle body (33), a roof (37) movably supported on the vehicle body (33), said roof (37) comprising at least two roof parts (3, 4), which are connected with each other and movable relative to each other, and at least one guide (15) mounted to the windscreen frame (16), wherein a first one of said roof parts (3), to which a roof front end (17) is mounted, is arranged between the windscreen frame (16) and a second one of said roof parts (4) and is in releasable engagement with the guide (15), the first roof part (3) being connected with the second roof part (4) by at least one control lever (8) so as to be displaceable relative to the second roof part (4), said control lever (8) being articulated to the first roof part (3) by means of a first bearing (7) and articulated to the second roof part (4) by means of a second bearing (9),
**characterised in that**
the first roof part (3) is guided so as to be displaced and pivoted along the guide (15), and while the first roof part (3) is displaced and pivoted relative to the guide (15) and the windscreen frame (16) by pivoting the control lever (8) with respect to the second roof part (4), the second roof part (4) remains in its position during this operation.

2. The vehicle according to claim 1, **characterised in that** the control lever (8) is connected with the two roof parts (3, 4) by means of the two bearings such that pivoting the control lever (8) relative to at least one of the two roof parts (3, 4) allows a space to be formed, or varied, between the two roof parts (3, 4).

3. The vehicle according to claim 1 or 2, **characterised in that** the first roof part (3) is guided by means of the guide (15) so as to be displaceable in a direction (35) which extends transversely to the pivoting axes of the two bearings (7, 9).

4. The vehicle according to any one of the preceding claims, **characterised in that** the pivoting axes of the two bearings (7, 9) are located in a first common plane (11).

5. The vehicle according to any one of the preceding claims, **characterised in that** the two roof parts (3, 4) comprise a space (13) between a front end of the second roof part (4) and a rear end of the first roof part (3) when the roof (37) is closed.

6. The vehicle according to claims 4 and 5, **characterised in that** the pivoting axis of the first bearing (7) is located in a second plane (14) which extends through the space (13) and is perpendicular to the first plane (13).

7. The vehicle according to any one of the preceding claims, **characterised in that** the pivoting axes of both bearings (7, 9) are parallel to each other.

8. The vehicle according to any one of the preceding claims, **characterised in that** the control lever (8) is connected with the first roof part (3) by interposition of an actuator (5) extending away from the first roof part (3) and comprising the first bearing (7), said actuator (5) being rigidly mounted to the first roof part (3).

9. The vehicle according to any one of the preceding claims, **characterised in that** a drive means (20) acts on the control lever (8), said drive means allowing the control lever (8) to be pivoted relative to at least one of the two roof parts (3, 4).

10. The vehicle according to claim 9, **characterised in that** the drive means (20) is mounted to or in the second roof part (4).

11. The vehicle according to any one of the preceding claims, **characterised in that** at least one drive device (34), connected with the first roof part (3) by a rod assembly (31), is mounted to the vehicle body (33) at least indirectly, said drive device (34) allowing the first roof part (3) to be moved relative to the second roof part (4).

12. The vehicle according to any one of the preceding claims, **characterised in that** the roof (37) is mounted at least indirectly to the vehicle body (33) in a movable manner by means of the second roof part (4) or by means of at least one additional roof part (45) connected with the second roof part (4).

13. The vehicle according to any one of the preceding claims, **characterised in that** at least one arrester (18) is mounted to the first roof part (3), said arrester (18) entering into displaceable engagement with a recess (19) which is provided in the guide (15) and is open at least on one side.

14. The vehicle according to claim 13, **characterised in that** the guide (15) is provided with a support (29) for the arrester (18).

15. The vehicle according to any one of the preceding claims, **characterised in that** the roof (37) comprises a convertible top structure (2) with at least two roof frames (3, 4) which form the two roof parts.

## Revendications

1. Véhicule comprenant une carrosserie (33), un cadre de pare-brise (16) monté sur ladite carrosserie (33), un toit (37) supporté sur la carrosserie (33) de manière déplaçable, ce toit (37) comprenant au moins deux éléments de toit (3, 4), qui sont reliés l'un à l'autre et déplaçables l'un par rapport à l'autre, et au moins un guide (15) monté sur le cadre de pare-brise (16), dans lequel véhicule un premier desdits éléments de toit (3), sur lequel est monté une extrémité avant du toit (17), est disposé entre le cadre de pare-brise (16) et un deuxième desdits éléments de toit (4) et vient en prise, de manière séparable, dans le guide (15), le premier élément de toit (3) étant relié au deuxième élément de toit (4) par au moins un levier de commande (8) de manière déplaçable par rapport au deuxième élément de toit (4), ledit levier de commande (8) étant articulé au premier élément de toit (3) au moyen d'un premier palier (7) et articulé au deuxième élément de toit (4) au moyen d'un deuxième palier (9),
**caractérisé en ce que**
le premier élément de toit (3) est guidé de manière déplaçable et pivotante selon le guide (15), et lorsque le premier élément de toit (3) est déplacé et pivoté par rapport au guide (15) et au cadre de pare-brise (16) par pivotement du levier de commande (8) par rapport au deuxième élément de toit (4), le deuxième élément de toit (4) reste dans sa position pendant cette opération.

2. Véhicule selon la revendication 1, **caractérisé en ce que** le levier de commande (8) est relié aux deux éléments de toit (3, 4) au moyen des deux paliers de sorte qu'un écart entre les deux éléments de toit (3, 4) puisse être produit ou varié par pivotement du levier de commande (8) par rapport à au moins un des deux éléments de toit (3, 4).

3. Véhicule selon la revendication 1 ou 2, **caractérisé en ce que** le premier élément de toit (3) est guidé au moyen du guide (15) de manière à être déplaçable dans une direction (35) qui s'étend de manière par rapport aux axes de pivotement des deux paliers (7, 9).

4. Véhicule selon l'une quelconque des revendications précédentes, **caractérisé en ce que** les axes de pivotement des deux paliers (7, 9) sont disposés dans un premier plan commun (11).

5. Véhicule selon l'une quelconque des revendications précédentes, **caractérisé en ce que** les deux éléments de toit (3, 4) présentent un écart (13) entre une extrémité avant du deuxième élément de toit (4) et une extrémité arrière du premier élément de toit (3) lorsque le toit (37) est fermé.

6. Véhicule selon les revendications 4 et 5, **caractérisé en ce que** l'axe de pivotement du premier palier (7) est disposé dans un deuxième plan (14) qui s'étend à travers l'ecart (13) et est perpendiculaire au premier plan (13).

7. Véhicule selon l'une quelconque des revendications précédentes, **caractérisé en ce que** les axes de pivotement des deux paliers (7, 9) sont parallèles l'un à l'autre.

8. Véhicule selon l'une quelconque des revendications précédentes, **caractérisé en ce que** le levier de commande (8) est relié au premier élément de toit (3) en interposant un actionneur (5) qui s'étend à partir du premier élément de toit (3) et comprend le premier palier (7), ledit actionneur (5) étant monté de manière rigide sur le premier élément de toit (3).

9. Véhicule selon l'une quelconque des revendications précédentes, **caractérisé en ce qu'**un moyen d'entraînement (20) agit sur le levier de commande (8), ledit moyen d'entraînement permettant un pivotement du levier de commande (8) par rapport à au moins un des deux éléments de toit (3, 4).

10. Véhicule selon la revendication 9, **caractérisé en ce que** le moyen d'entraînement (20) est monté sur ou dans le deuxième élément de toit (4).

11. Véhicule selon l'une quelconque des revendications précédentes, **caractérisé en ce qu'**au moins un dispositif d'entraînement (34), relié au premier élément de toit (3) par une tringlerie (31), est monté sur la carrosserie (33) au moins indirectement, ledit dispositif d'entraînement (34) permettant de déplacer le premier élément de toit (3) par rapport au deuxième élément de toit (4).

12. Véhicule selon l'une quelconque des revendications précédentes, **caractérisé en ce que** le toit (37) est monté au moins indirectement sur la carrosserie (33) de manière déplaçable au moyen du deuxième élément de toit (4) ou au moyen d'au moins un élément de toit (45) additionnel relié au deuxième élément de toit (4).

13. Véhicule selon l'une quelconque des revendications précédentes, **caractérisé en ce qu'**au moins un moyen d'arrêt (18) est monté sur le premier élément de toit (3), ledit moyen d'arrêt (18) venant en prise de manière déplaçable dans un évidement (19) réalisé dans le guide (15) et ouvert d'au moins un côté.

14. Véhicule selon la revendication 13, **caractérisé en ce que** le guide (15) présente un support (29) pour le moyen d'arrêt (18).

15. Véhicule selon l'une quelconque des revendications précédentes, **caractérisé en ce que** le toit (37) comprend un châssis de capote (2) présentant au moins deux cadres de toit (3, 4) qui constituent les deux éléments de toit.
